# FASCICULE DE BREVET EUROPEEN

(11) **EP 1 338 445 B1**
(45) Date de publication et mention de la délivrance du brevet: **19.12.2007**
(21) Numéro de dépôt: 03002601.7
(22) Date de dépôt: 07.02.2003
(51) Int. Cl.: B60C 23/04

(54) **Disposition de fixation d'un module d'un système de surveillance des pneumatiques sur une roue**
Vorrichtung zur Befestigung von einem Modul eines Reifenüberwachungssystem auf ein Rad
Device for fixing a module of an electronic tyre surveillance system on a wheel

(30) Priorité: 13.02.2002 FR 0201964; 15.05.2002 FR 0206130
(43) Date de publication de la demande: 27.08.2003
(73) Titulaire: Société de Technologie Michelin, 63000 Clermont-Ferrand (FR); Michelin Recherche et Technique S.A., 1763 Granges-Paccot (CH)
(72) Inventeur: Altaber, Gérard, 63122 Ceyrat (FR); Francois, Jean-Pierre, 63540 Romagnat (FR); Lonquety, Bernard, 75019 Paris (FR); Poret, Philippe, 77580 Crecy-la-Chapelle (FR)
(74) Mandataire: Dequire, Philippe Jean-Marie Denis

(56) Documents cités:
- FR-A- 2 429 114
- GB-A- 1 301 359

## Description

L'invention a pour objet un dispositif de fixation d'un module d'un système de surveillance des pneumatiques sur une roue d'un véhicule.

L'invention concerne la transmission des signaux utilisés dans la surveillance des pneumatiques, et notamment de leur pression. Elle concerne plus particulièrement la fixation aux roues des modules destinés à mesurer et à transmettre par liaison radio à un récepteur par exemple disposé dans le châssis du véhicule au moins une grandeur caractéristique de l'état des pneumatiques monté sur les roues, notamment la pression de gonflage.

L'invention vise à assurer une transmission fiable des signaux électromagnétiques par liaison radio entre les modules et les récepteurs ainsi qu'une fixation mécaniquement fiable elle aussi.

On connaît déjà des systèmes de fixation de tels modules, décrit par exemple dans la demande de brevet FR 2429114 qui montre le préambule de la revendication 1, mais ils ne répondent pas à l'objet visé ci-dessus.

Le dispositif « Tyre Check » de la société Technologie Sicurezza Stradale comprend un module fixé au disque de roue par deux pattes serrées sous deux écrous consécutifs. Le module est raccordé pneumatiquement à la valve et comprend un émetteur radio couplé à un récepteur en cabine. Le mode de montage des pattes sous les écrous de roue présente l'inconvénient d'induire des vibrations importantes lors des serrages des écrous avec des clés à choc (serrage en usine). Ces vibrations sont susceptibles d'endommager l'électronique du module. D'autre part, lorsque la dimension axiale des roues concernées augmente, la qualité du couplage entre le module et le récepteur se dégrade parce que la gorge de montage et le crochet de la jante ainsi que le disque de la roue adjacents forment une cavité métallique qui rend plus difficile les communications radio.

Le brevet US 5,285,189 utilise une fixation du module dans la gorge de montage. Ce dispositif de fixation comprend une bande métallique entourant la gorge de montage de la jante de la roue et enserrant le module. La position du module dans la gorge de montage n'est pas favorable à une bonne communication par liaison radio entre le module et le récepteur dans le châssis du véhicule. Cette position entraîne aussi des risques d'endommagement du module lors de montage ou de démontage des pneumatiques sur la roue comportant le module.

Le brevet US 5,838,229 utilise une fixation du module sur le pied d'une valve de roue. Il en résulte que le module est aussi disposé à l'intérieur de la cavité du pneumatique substantiellement dans la gorge de montage comme précédemment.

Le dispositif de fixation sur une roue d'un véhicule d'un module destiné à mesurer et à transmettre, notamment par liaison radio, à un récepteur au moins une grandeur caractéristique de l'état d'un pneumatique monté sur ladite roue, notamment la pression de gonflage, selon l'invention, comprend des moyens de liaison rigidement liés au module et des moyens d'attache à la roue des moyens de liaison. Ce dispositif est tel qu'il est adapté pour fixer le module radialement intérieurement relativement à un crochet et un siège de jante de la roue et que les moyens d'attache sont adaptés pour appliquer lesdits moyens de liaison contre la surface radialement intérieure dudit crochet de jante avec un effort de serrage adaptable d'intensité supérieure à une valeur donnée.

Cette position du module a l'avantage de disposer le module à proximité de l'extrémité axiale de la roue, donc dans une zone où l'effet cavité de l'environnement métallique du module ne perturbe que très peu les émissions radio. Cette position est aussi proche du trou de valve du pneumatique, ce qui permet d'utiliser un raccord pneumatique entre le module et le trou de valve de longueur très faible, de l'ordre d'une dizaine de centimètres seulement. La fixation du module de roue avec un effort de serrage adaptable, c'est-à-dire réglable, des moyens de liaison contre la surface du crochet de jante permet au dispositif selon l'invention d'être insensible aux variations usuelles d'épaisseur et de forme des crochets de jante des roues. C'est une garantie de fiabilité de la fixation.

Ce dispositif de fixation a aussi l'avantage de pouvoir être monté sur tout véhicule, sans aucune adaptation, ni modification des roues concernées.

L'effort de serrage est de préférence supérieur à 2500 N. Ceci à l'avantage d'assurer une fixation mécaniquement fiable du module.

Selon un mode de réalisation préférentiel, les moyens de liaison comprennent une plaque rigidement liée au module et une pièce de liaison, rigidement liée à la plaque et adaptée pour être disposée contre la face radialement intérieure du crochet de jante.

Les moyens de liaison peuvent aussi comprendre une pièce de liaison unique rigidement liée au module et adaptée pour être disposée contre la face radialement intérieure du crochet de jante.

Avantageusement, la pièce de liaison est adaptée pour venir en contact avec la face radialement intérieure du crochet de jante en au moins deux zones d'appui situées de part et d'autre du creux du crochet de jante.

Cela a l'avantage de garantir une fixation stable de la pièce de liaison contre la face intérieure du crochet de jante.

Delon un mode de réalisation préférentiel, les moyens d'attache comprennent un clip de fixation en forme générale de U dont une première extrémité est destinée à venir s'appuyer contre la face radialement extérieure du crochet de jante et dont une seconde extrémité est destinée à venir s'appuyer contre la pièce de liaison. De préférence, la première extrémité du clip de fixation est effilée. Cela a pour but de garantir que, en service, la face extérieure du bourrelet du pneumatique adjacent à cette extrémité du clip de fixation ne soit pas blessée lors d'un contact éventuel.

La géométrie du clip de fixation peut être adaptée pour développer lors de sa mise en place autour de la pièce de liaison et de la face radialement supérieure du crochet de jante des efforts de serrage dus à la déformation élastique du clip d'intensité supérieure à 2500 N.

Alternativement, la seconde extrémité du clip de fixation peut comporter un moyen d'application d'un effort donné de serrage entre le clip et la pièce de liaison.

Il est avantageux pour la robustesse du dispositif de fixation que la direction d'application de l'effort de serrage coupe la branche opposée du U du clip de fixation.

Préférentiellement, la pièce de liaison ayant une première face destinée à être appliquée contre la face radialement intérieure du crochet de jante et une seconde face opposée à la première, cette seconde face est adaptée pour que le plan tangent de cette seconde face au point d'application de l'effort de serrage est sensiblement normal à la direction d'application de cet effort de serrage.

Le moyen d'application d'un effort donné peut être une vis de pression disposée à travers une extrémité du clip de fixation. Cette vis de pression peut aussi avoir un diamètre de 5 mm et être mise en place avec un couple de serrage supérieur à 2 N.m.

Le dispositif de fixation selon l'invention est particulièrement destiné à fixer des modules sur des roues en tôle d'acier pour véhicules poids lourd.

Deux exemples de mise en oeuvre de l'invention, donnés à titre non limitatif, sont maintenant décrits en se référant aux figures annexées suivantes :
- la figure 1 est une vue de face du dispositif de fixation selon l'invention et du module, montés sur un crochet de jante; et
- la figure 2 est une vue en coupe AA tel qu'indiqué à la figure 1 ;
- la figure 3 est une vue de face, dans la direction B, tel qu'indiqué à la figure 1 ;
- la figure 4 est une vue en coupe du clip de fixation ; et
- la figure 5 est une vue en coupe similaire à la figure 1 d'un second exemple de dispositif selon l'invention.

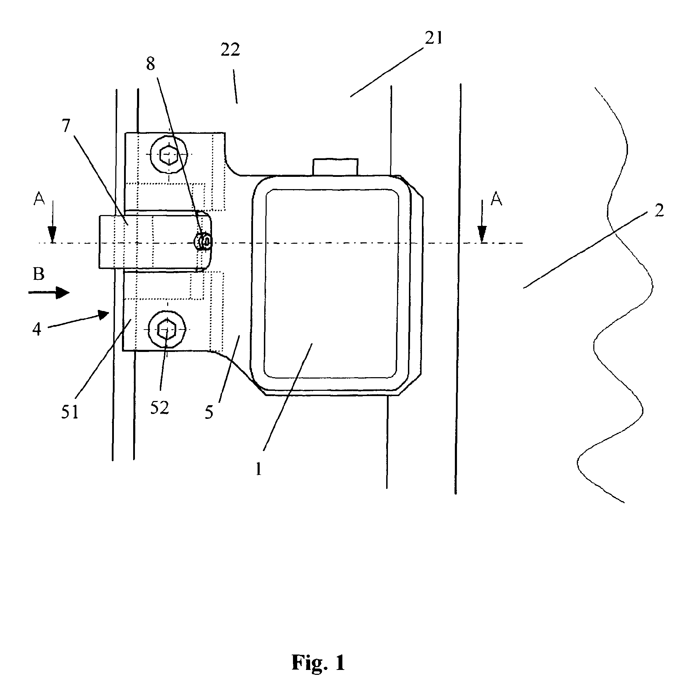

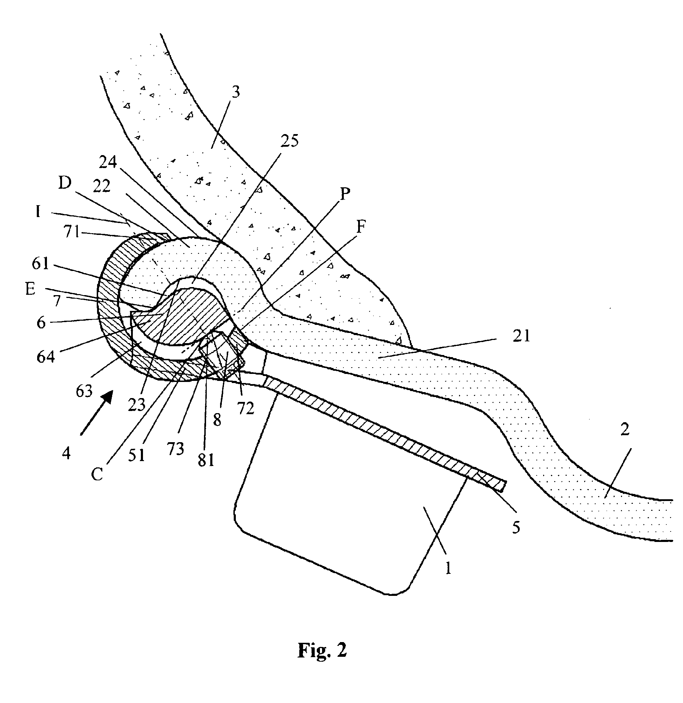

Les figures 1 et 2 présentent un module 1 fixé sous un siège 21 de jante de roue 2 par le dispositif de fixation 4 selon l'invention. La figure 2 est une coupe AA de la figure 1.

Dans la description, on prend comme référence des directions « axiale » et « radiale », l'axe de rotation de la roue.

A la figure 2, on voit un bourrelet de pneumatique 3 en place sur un siège 21 et un crochet 22 d'une jante de roue 2. Le module 1 est fixé radialement sous le siège de jante 21 par le dispositif 4. Ce dispositif 4 comprend des moyens de liaison composés d'une plaque 5, sur laquelle est fixé le module 1 et d'une pièce de liaison 6. Le dispositif 4 comprend aussi des moyens d'attache comprenant un clip de fixation 7 et une vis de pression 8.

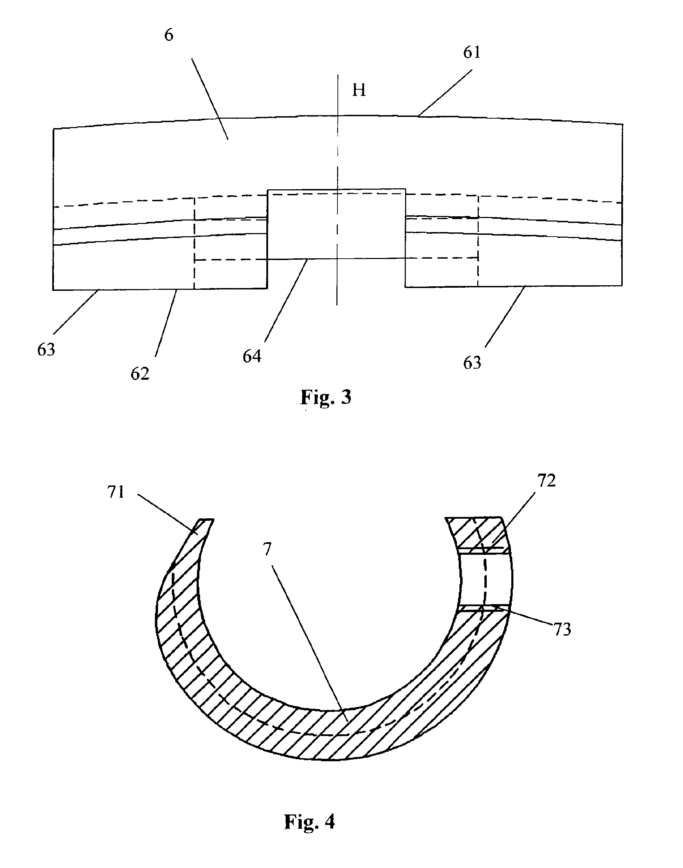

La plaque 5 est une plaque métallique avec deux pattes 51 de fixation à la pièce de liaison 6 par deux vis 52 (figure 1). La pièce de liaison (voir figure 3) a une première face 61 disposée contre la face radialement intérieure 23 du crochet de jante 22 et une seconde face 62 opposée à la première. La face 61 a une géométrie adaptée pour être disposée contre la face radialement intérieure 23 du crochet de jante 22, dans les deux directions axiales et circonférentielle du crochet de jante 22. La seconde face 62 a deux parties latérales 63, planes, de liaison avec la plaque 5, et une partie centrale 64 évidée. Le plan de symétrie H de la pièce de liaison 6 correspond au plan de coupe de la figure 2. La pièce de liaison est avantageusement réalisée en un alliage métallique moulé.

Le clip de fixation 7 (voir figure 4) a une forme générale de U avec une première extrémité 71, effilée, destinée à venir s'appuyer contre la face radialement extérieure 24 du crochet de jante 22 et une seconde extrémité 72 avec un filetage 73 destiné à recevoir une vis de pression 8. Il est à noter que l'axe du filetage 73 coupe la seconde branche du U. L'extrémité 81 de la vis de pression vient s'appuyer contre la partie centrale 64 de la seconde face 62 de la pièce de liaison 6. Lors de la fixation du module 1, on applique la vis de pression 8 avec un couple de serrage donné, de préférence supérieur à 2 N.m pour une vis de pression de diamètre 5 mm, ce qui entraîne un effort de serrage supérieur à 2500 N. Cet effort très élevé est nécessaire pour que le module 1 reste bien en place lors des sollicitations en service du pneumatique et de la roue. Le clip de fixation est de préférence constitué d'un acier élastique.

La figure 2 précise aussi les zones d'appui préférentielles entre les pièces du dispositif 4. La déformation du clip de fixation 7 due au serrage de la vis de pression 8 entraîne l'apparition d'efforts de serrage dans au moins deux zones de contact préférentielles. La première zone de contact est en C, zone de contact entre l'extrémité 81 de la vis de pression 8 et la face 64. En C, pour qu'il y ait une bonne transmission de l'effort de serrage, le plan tangent P à la face 64 est sensiblement normal à l'axe I du filetage 73. La direction d'application de l'effort de serrage en C est ainsi sensiblement confondue avec l'axe I. La seconde zone de contact est en D, zone de contact entre la première extrémité 71 du clip de fixation et la face radialement extérieure 24 du crochet de jante 22. Comme l'axe du filetage 73 coupe la seconde branche du U du clip de fixation, la zone d'application D est décalée axialement intérieurement relativement à cet axe du filetage et ainsi le clip de fixation enroule bien le crochet de jante et la pièce de liaison, cela garantit une fixation très robuste puisque pour que le clip quitte sa position, il lui faut augmenter son écartement et ainsi augmenter l'effort de serrage. La figure 2 illustre aussi que les points d'appui entre la pièce de liaison 6 et la face radialement intérieure 23 du crochet de jante 22 sont de préférence répartis en au moins deux zones E et F disposées de part et d'autre du creux 25 du crochet de jante 22. Dans l'exemple représenté, la zone F s'étend axialement largement du côté intérieur du creux de jante 25. Cela garantit une bonne fixation de la pièce de liaison 6 contre le crochet 22 et l'absence de tout mouvement de la pièce de liaison 6 et par suite du module 1 qui tendrait à le rapprocher et à l'écarter du siège de jante 21, en service. La plaque 5 a une épaisseur de 2 mm, suffisante pour interdire toute amplitude notable aux vibrations de la plaque 5 en service.

Le module 1 comprend usuellement un ensemble de composants tels des capteurs de pression, de température, des moyens de traitement des mesures des capteurs, des moyens pour transmettre ces mesures à un récepteur, tels un émetteur radio, par exemple situé dans le véhicule et de moyens d'alimentation en énergie tels une batterie ou une pile. L'ensemble de ces composants est rassemblé dans un boîtier de faible taille et de masse réduite, de l'ordre de 80 g. Le module 1 comprend aussi une sortie (non représentée) pour relier pneumatiquement le capteur de pression à la cavité interne du pneumatique via un raccord pneumatique ainsi qu'à une valve de gonflage (non représentés).

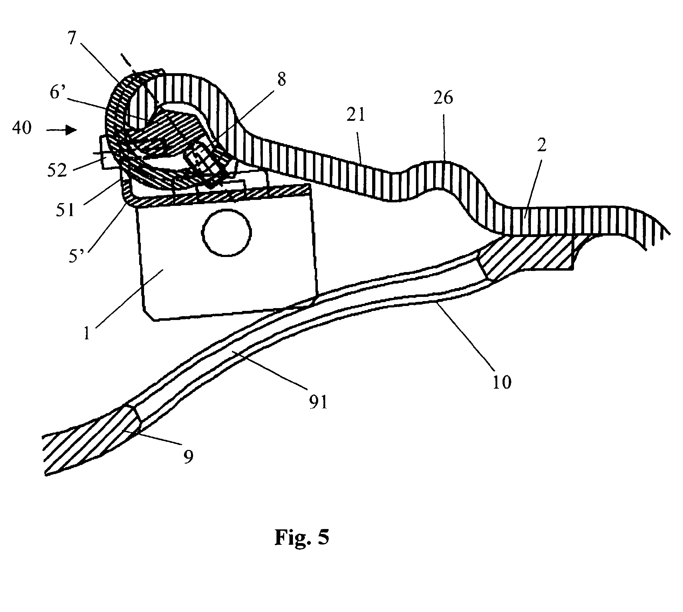

La figure 5 présente un second mode de réalisation d'un dispositif de fixation 40 selon l'invention adapté à la fixation d'un module 1 à un crochet de jante 2 d'une roue 10 en tôle d'acier standard de poids lourd. Cette roue 10 se compose d'une jante 2 et d'un disque 9. Le disque 9 et la jante 2 sont assemblés par soudure dans une zone de transition disposée entre la gorge de montage de la jante et un bossage ou « hump » 26 placé à l'extrémité axialement intérieure du siège 21. Le dispositif 40 comprend des moyens de liaison composés comme précédemment d'une plaque 5', sur laquelle est fixé le module 1, et d'une pièce de liaison 6'. Le dispositif 40 comporte aussi des moyens d'attache identiques à ceux du dispositif 4 comprenant un clip de fixation 7 et une vis de pression 8.

Ce dispositif se distingue du précédent en ce que la plaque 5' est sensiblement en forme de L. En conséquence, les deux pattes 51 de la plaque 5' sont fixées à la partie axialement extérieure de la pièce de liaison 6' au lieu de la partie radialement intérieure comme pour la plaque 5. Cela permet de placer le module 1 directement sous le crochet 22 de la jante 2. Le module doit être placé en regard d'un ajour 91 du disque 9 pour permettre sa mise en place.

## Revendications

1. Dispositif de fixation (4, 40) sur une roue d'un véhicule d'un module (1) destiné à mesurer et à transmettre, notamment par liaison radio, à un récepteur au moins une grandeur caractéristique de l'état d'un pneumatique (3) monté sur ladite roue, notamment la pression de gonflage, comprenant des moyens de liaison (5, 5', 6, 6') rigidement liés audit module (1) et des moyens d'attache (7, 8) à ladite roue desdits moyens de liaison (5, 5', 6, 6'), tel que ledit module (1) est fixé radialement intérieurement relativement à un crochet (22) et un siège (21) de jante (2) de ladite roue, et **caractérisé en ce que** lesdits moyens d'attache (7, 8) sont adaptés pour appliquer lesdits moyens de liaison (6, 6') contre la surface radialement intérieure (23) dudit crochet de jante (22) avec un effort de serrage adaptable d'intensité supérieure à une valeur donnée.

2. Dispositif (4, 40) selon la revendication 1, dans lequel ledit effort de serrage est supérieur à 2500 N.

3. Dispositif (4, 40) selon l'une des revendications 1 et 2, dans lequel lesdits moyens de liaison (5, 5', 6, 6') comprennent une plaque (5, 5') rigidement liée audit module (1) et une pièce de liaison (6, 6'), rigidement liée à ladite plaque (5, 5') et adaptée pour être disposée contre la face radialement intérieure (23) dudit crochet de jante (22).

4. Dispositif (4, 40) selon l'une des revendications 1 et 2, dans lequel lesdits moyens de liaison comprennent une pièce de liaison unique rigidement liée au module (1) et adaptée pour être disposée contre la face radialement intérieure (23) dudit crochet de jante (22).

5. Dispositif (4, 40) selon l'une des revendications 3 et 4, dans lequel ladite pièce de liaison (6, 6') est adaptée pour venir en contact avec la face radialement intérieure (23) dudit crochet de jante (22) en au moins deux zones d'appui (E, F) situées de part et d'autre du creux (25) dudit crochet de jante (22).

6. Dispositif (4, 40) selon l'une des revendications 3 à 5, dans lequel les moyens d'attache (7, 8) comprennent un clip de fixation (7) en forme générale d'un U dont une première extrémité (71) est destinée à venir s'appuyer contre la face radialement extérieure (24) dudit crochet de jante (22) et dont une seconde extrémité (72) est destinée à venir s'appuyer contre ladite pièce de liaison (6, 6').

7. Dispositif (4, 40) selon la revendication 6, dans lequel ladite première extrémité (71) dudit clip de fixation (7) est effilée.

8. Dispositif (4, 40) selon l'une des revendications 6 et 7, dans lequel la géométrie dudit clip de fixation (7) est adaptée pour développer lors de sa mise en place autour de la pièce de liaison (6, 6') et de la face radialement supérieure (24) du crochet de jante (22) des efforts de serrage dus à la déformation élastique dudit clip (7).

9. Dispositif (4, 40) selon l'une des revendications 6 et 7, dans lequel la seconde extrémité (72) dudit clip de fixation (7) comporte un moyen d'application (8) d'un effort donné de serrage entre ledit clip (7) et ladite pièce de liaison (6, 6').

10. Dispositif (4, 40) selon la revendication 9, dans lequel la direction d'application dudit effort de serrage coupe la branche opposée du U du clip de fixation.

11. Dispositif (4, 40) selon l'une des revendications 3 à 10, dans lequel ladite pièce de liaison (6, 6') ayant une première face (61) destinée à être appliquée contre la face radialement intérieure (23) du crochet de jante (22) et une seconde face (62) opposée à la première, ladite seconde face (62, 64) est adaptée pour que le plan tangent (P) de ladite seconde face (62, 64) au point d'application (C) de l'effort de serrage est sensiblement normal à la direction d'application (I) dudit effort de serrage.

12. Dispositif (4, 40) selon la revendication 11, dans lequel ledit moyen d'application (8) d'un effort donné est une vis de pression (8) disposée à travers ladite seconde extrémité (72) dudit clip de fixation (7).

13. Dispositif (4, 40) selon la revendication 12, dans lequel ladite vis de pression (8) est une vis de pression de diamètre 5 mm et est mise en place avec un couple de serrage supérieur à 2 N.m.

14. Dispositif (4, 40) selon l'une des revendications 1 à 13, dans lequel la roue concernée est une roue en tôle d'acier pour véhicule poids lourd.

15. Dispositif (40) selon l'une des revendications 1 à 14, dans lequel, la roue (10) comportant un disque (9) avec des ajours (91), le module (1) est fixé en regard d'un ajour (91) du disque (9).

## Claims

1. Device (4, 40) for fixing to a vehicle wheel a module (1) intended to measure and transmit to a receiver, in particular by radio link, at least one quantity characteristic of the state of a tire (3) mounted on said wheel, in particular its inflation pressure, comprising connecting means (5, 5', 6, 6') rigidly connected to said module (1) and means (7, 8) for attachment of said connecting means (5, 5', 6, 6') to said wheel, such that the module (1) is fixed radially internally relative to a hook (22) and seat (21) of the rim (2) of said wheel, and **characterized in that** said attachment means (7, 8) are adapted to apply said connecting means (6, 6') against the radially inner surface (23) of said rim hook (22) with an adaptable clamping stress of intensity greater than a given value.

2. Device (4, 40) according to claim 1, in which said clamping stress is greater than 2500 N.

3. Device (4, 40) according to either of claims 1 and 2, in which said connecting means (5, 5', 6, 6') comprise a plate (5, 5') rigidly connected to said module (1) and a connecting piece (6, 6') rigidly connected to said plate (5, 5') and adapted to be arranged against the radially inner face (23) of said rim hook (22).

4. Device (4, 40) according to either of claims 1 and 2, in which said connecting means comprise a single connecting piece rigidly connected to the module (1) and adapted to be arranged against the radially inner face (23) of said rim hook (22).

5. Device (4, 40) according to either of claims 3 and 4, in which said connecting piece (6, 6') is adapted to come into contact with the radially inner face (23) of said rim hook (22) and at least two bearing areas (E, F) located on either side of the hollow (25) of said rim hook (22).

6. Device (4, 40) according to any of claims 3 to 5, in which the attachment means (7, 8) comprise a fixation clip (7), generally U-shaped, of which a first end (71) is intended to come to bear against the radially outer face (24) of said rim hook (22), and a second end (72) of which is intended to come to bear against the said connecting piece (6, 6').

7. Device (4, 40) according to claim 6, in which said first end (71) of the said fixation clip (7) is tapered.

8. Device (4, 40) according to either of claims 6 and 7, in which the geometry of said fixation clip (7) is adapted to develop clamping stresses due to the elastic deformation of said clip (7) when placed around the connecting piece (6, 6') and the radially upper face (24) of the rim hook (22).

9. Device (4, 40) according to either of claims 6 and 7, in which the second end (72) of the said fixation clip (7) comprises a means (8) of applying a given clamping stress between said clip (7) and said connecting piece (6, 6').

10. Device (4, 40) according to claim 9, in which the direction of application of said clamping stress intersects the opposed branch of the U of the fixation clip.

11. Device (4, 40) according to any of claims 3 to 10, in which, when said connecting piece (6, 6') has a first face (61) intended to be applied against the radially inner face (23) of the rim hook (22) and a second face (62) opposed to the first, the said second face (62, 64) is adapted so that the plane (P) tangent to said second face (62, 64) at the point of application (C) of the clamping stress is substantially perpendicular to the direction of application (I) of said clamping stress.

12. Device (4, 40) according to claim 11, in which said means (8) of applying a given stress is a setscrew (8) arranged through said second end (72) of the said fixation clip (7).

13. Device (4, 40) according to claim 12, in which said setscrew (8) is a setscrew 5 mm in diameter emplaced with a tightening torque greater than 2 N.m.

14. Device (4, 40) according to any of claims 1 to 13, in which the wheel in question is a wheel of sheet steel for a commercial vehicle.

15. Device (40) according to any of claims 1 to 14, in which, white the wheel (10) comprises a disk (9) with openings (91), the module (1) is fixed facing an opening (91) of the disk (9).

## Patentansprüche

1. Vorrichtung (4, 40) zur Befestigung auf einem Rad eines Fahrzeugs eines Moduls (1), welches dazu bestimmt ist, insbesondere durch Funkverbindung mindestens eine charakteristische Größe für den Zustand eines auf dem Rad montierten Reifens (3), insbesondere den Aufblasdruck, zu messen und an einen Empfänger zu übertragen, umfassend Verbindungsmittel (5, 5', 6, 6'), die starr mit dem Modul (1) verbunden sind, und Mittel (7, 8) zur Befestigung der Verbindungsmittel (5, 5', 6, 6') am Rad, wobei das Modul (1) radial innen in Bezug zu einem Haken (22) und einem Sitz (21) einer Felge (2) des Rades befestigt ist, und **dadurch gekennzeichnet, dass** die Befestigungsmittel (7, 8) dazu vorgesehen sind, die Verbindungsmittel (6, 6') an die radial innere Fläche (23) des Felgenhakens (22) mit einer anpassbaren Klemmkraft mit einer Stärke, die größer als ein gegebener Wert ist, anzulegen.

2. Vorrichtung (4, 40) nach Anspruch 1, bei der die Klemmkraft größer als 2500 N ist.

3. Vorrichtung (4, 40) nach einem der Ansprüche 1 und 2, bei der die Verbindungsmittel (5, 5', 6, 6') eine Platte (5, 5'), die starr mit dem Modul (1) verbunden ist, und ein Verbindungsstück (6, 6') umfassen, das starr mit der Platte (5, 5') verbunden und dazu ausgeführt ist, an die radial innere Seite (23) des Felgenhakens (22) angelegt zu werden.

4. Vorrichtung (4, 40) nach einem der Ansprüche 1 und 2, bei der die Verbindungsmittel ein einziges starr mit dem Modul (1) verbundenes Verbindungsstück aufweisen, das dazu ausgeführt ist, an die radial innere Seite (23) des Felgenhakens (22) angelegt zu werden.

5. Vorrichtung (4, 40) nach einem der Ansprüche 3 und 4, bei der das Verbindungsstück (6, 6') dazu ausgeführt ist, mit der radial inneren Seite (23) des Felgenhakens (22) in mindestens zwei Stützzonen (E, F) in Kontakt zu kommen, die sich beiderseits des Hohlraums (25) des Felgenhakens (22) befinden.

6. Vorrichtung (4, 40) nach einem der Ansprüche 3 bis 5, bei der die Befestigungsmittel (7, 8) einen Befestigungsclip (7) in allgemeiner U-Form umfassen, dessen erstes Ende (71) dazu bestimmt ist, sich an die radial äußere Fläche (24) des Felgenhakens (22) anzulegen, und dessen zweites Ende (72) dazu bestimmt ist, sich an das Verbindungsstück (6, 6') anzulegen.

7. Vorrichtung (4, 40) nach Anspruch 6, bei der das erste Ende (71) des Befestigungsclips (7) zugespitzt ist.

8. Vorrichtung (4, 40) nach einem der Ansprüche 6 und 7, bei der die Geometrie des Befestigungsclips (7) derart vorgesehen ist, dass bei seiner Anbringung um das Verbindungsstück (6, 6') und die radial obere Seite (24) des Felgenhakens (22) Klemmkräfte auf Grund der elastischen Verformung des Clips (7) entwickelt werden.

9. Vorrichtung (4, 40) nach einem der Ansprüche 6 und 7, bei der das zweite Ende (72) des Befestigungsclips (7) ein Mittel (8) zum Anlegen einer gegebenen Klemmkraft zwischen dem Clip (7) und dem Verbindungsstück (6, 6') umfasst.

10. Vorrichtung (4, 40) nach Anspruch 9, bei der die Richtung des Anlegens der Klemmkraft den gegenüberliegenden Schenkel des U des Befestigungsclips schneidet.

11. Vorrichtung (4, 40) nach einem der Ansprüche 3 bis 10, bei der das Verbindungsstück (6, 6') eine erste Seite (61), die dazu bestimmt ist, an die radial innere Seite (23) des Felgenhakens (22) angelegt zu werden, und eine zweite Seite (62), die der ersten gegenüberliegt, hat, wobei die zweite Seite (62, 64) dazu vorgesehen ist, dass die die zweite Seite (62, 64) am Punkt (C) des Anlegens der Klemmkraft tangierende Ebene (P) im Wesentlichen normal auf die Richtung (I) des Anlegens der Klemmkraft ist.

12. Vorrichtung (4, 40) nach Anspruch 11, bei der das Mittel (8) zum Anlegen einer gegebenen Kraft eine Druckschraube (8) ist, die durch das zweite Ende (72) des Befestigungsclips (7) angeordnet ist.

13. Vorrichtung (4, 40) nach Anspruch 12, bei der die Druckschraube (8) eine Druckschraube mit einem Durchmesser von 5 mm ist und mit einem Anziehmoment über 2 N.m angebracht wird.

14. Vorrichtung (4, 40) nach einem der Ansprüche 1 bis 13, bei der das betreffende Rad ein Rad aus Stahlblech für Lastkraftwagen ist.

15. Vorrichtung (40) nach einem der Ansprüche 1 bis 14, bei der das Modul (1), wobei das Rad (10) eine Scheibe (9) mit Öffnungen (91) umfasst, gegenüber einer Öffnung (91) der Scheibe (9) befestigt ist.
